## Europäisches Patentamt
## European Patent Office
## Office européen des brevets

(11) Publication number: **0 283 318**
**A1**

(12) # EUROPEAN PATENT APPLICATION

(21) Application number: **88302432.5**

(22) Date of filing: **21.03.88**

(51) Int. Cl.⁴: **B 60 G 11/00**

(30) Priority: **20.03.87 GB 8706730**

(43) Date of publication of application:
**21.09.88 Bulletin 88/38**

(84) Designated Contracting States:
**AT BE CH DE ES FR IT LI LU NL SE**

(71) Applicant: **GKN Sankey Limited**
**P.O. Box 20, Hadley Castle Works**
**Telford, Shropshire TF1 4RE (GB)**

(72) Inventor: **van Helden, James Henry**
**17 Fairways Drive Madeley**
**Telford Shropshire TF7 5 TD (GB)**

(74) Representative: **Dodd, Graham Marshall et al**
**Guest Keen and Nettlefolds plc Group Patents and**
**Licensing Department P.O. Box 55 Ipsley House Ipsley**
**Church Lane**
**Redditch Worcestershire B98 0TL (GB)**

(54) Assembly including leaf spring of composite material.

(57) An element to be disposed in a clamped assembly securing another component to a leaf spring of composite material, interposed between facing surfaces of the spring and component and being of an elastomeric material, comprising a portion (22, 30) of generally flat sheet-like form and a formation extending therefrom for engaging a recess in the component, the formation comprising a metal sleeve (27, 32) surrounding a core portion (26, 31) of the elastomeric material of the element.

Fig. 3

Fig. 4

**Description**

ASSEMBLY INCLUDING LEAF SPRING OF COMPOSITE MATERIAL

This invention relates generally to leaf springs made of composite, fibre-reinforced plastics, material, and to assemblies wherein a component is held to such a spring by clamping means. More particularly, the invention relates to an element for disposition in such an assembly.

In a typical installation of a leaf spring in a motor vehicle, an axle beam is held to the spring by clamping means such as U-bolts. When the clamping means is tightened, the axle beam is firmly held in the desired position on the spring, but it is desirable to provide some means to ensure that the correct position of the component on the spring is established during assembly. A further desirable provision is that of some form of load distributing element between the clamped surfaces of the spring and component, to spread the load into the composite material of the spring and prevent the initiation of fatigue cracks into the spring material. Such a load distributing element, if of a resilient, e.g. elastomeric, material, and if held to the spring by an adhesive, prevents penetration of dirt to the clamped surfaces of the spring and component which otherwise could potentially cause abrasive damage to the surface of the spring.

In International Patent Application Publication No. WO84/04949, there is disclosed an element for interposition between the surface of a spring and a component secured to the spring by clamping means, the element comprising a sheet of resilient material with a formation on one side engagable with a recess in the spring and, on the other side, a further formation engagable with a recess in the component. In the example described, the element is of a polyurethane material, and although the formations engagable with the spring and component are flexible as a result of the nature of such material, they can provide sufficient location for assembly purposes. However, the formation which engages the component secured to the spring is relatively vulnerable to damage during assembly even though it may have an internal reinforcement. An axle component as used in a motor vehicle is relatively massive, and it is easy to damage the protruding formation if an axle component makes contact with it in other than the correct position and orientation. The axle and spring may then not be correctly relatively positioned in the finished assembly.

It is the object of the present invention to overcome or reduce this disadvantage.

According to one aspect of the invention, we provide an element for disposition in an assembly of a leaf spring of composite material and a component held to the spring by clamping means, said element being arranged to be interposed between facing surfaces of said spring and component and being of a resilient, preferably elastomeric, material, comprising a portion of generally flat sheet-like form and a formation extending therefrom for engaging a recess in said component, said formation comprising a metal sleeve surrounding a core portion of the resilient material of the element.

In an element according to the invention, the metal sleeve prevents the projecting formation from being wholly or partially crushed during assembly. This is in addition to the advantage possessed by the element as described in the international patent application aforesaid, namely that of requiring no separate locating component to be handled during assembly procedures.

The element may be one which, in addition to being interposed between surfaces of the spring and component facing in the direction of clamping of the assembly, has edge portions engagable with side surfaces of the spring so that, in an assembly with another such element, the spring is substantially enclosed by elastomeric material in the clamped assembly.

In use, an element according to the invention is preferably adhesively secured to the spring to prevent penetration of abrasive dirt to the spring surface beneath the element. This is particularly important with springs of composite material, which is vulnerable to damage from abrasion.

The invention further provides an assembly incorporating an element according to the invention as above described.

The invention will now be described by way of example with reference to the accompanying drawings, of which:-

Figure 1 is a side elevation of a clamped assembly of an axle beam and part of a leaf spring, according to the invention;

Figure 2 is an end elevation of the assembly of Figure 1;

Figures 3, 4 and 5 are respectively longitudinal section, plan and transverse section of the element according to the invention used in the assembly of Figures 1 and 2;

Figure 6 is a section through a further embodiment of element according to the invention;

Figure 7 is a plan of the element of Figure 6.

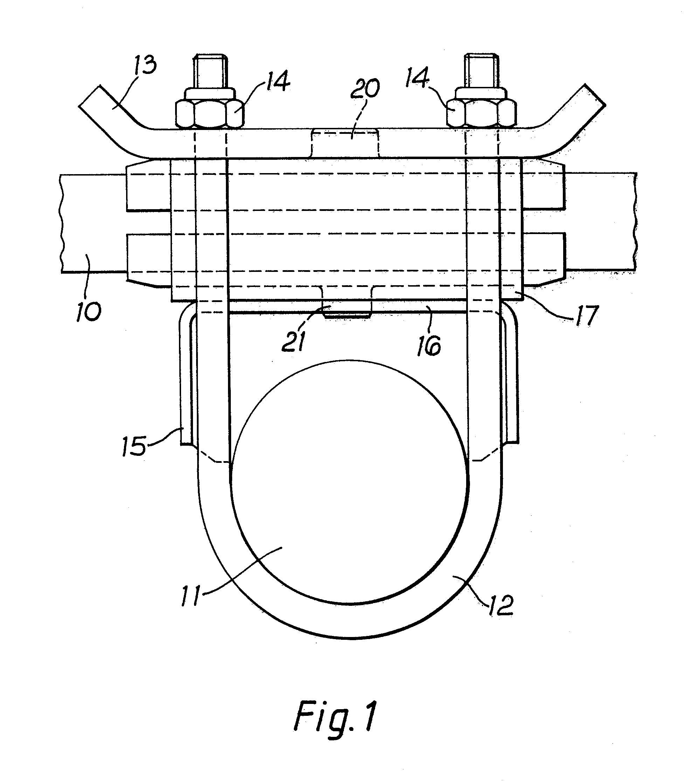

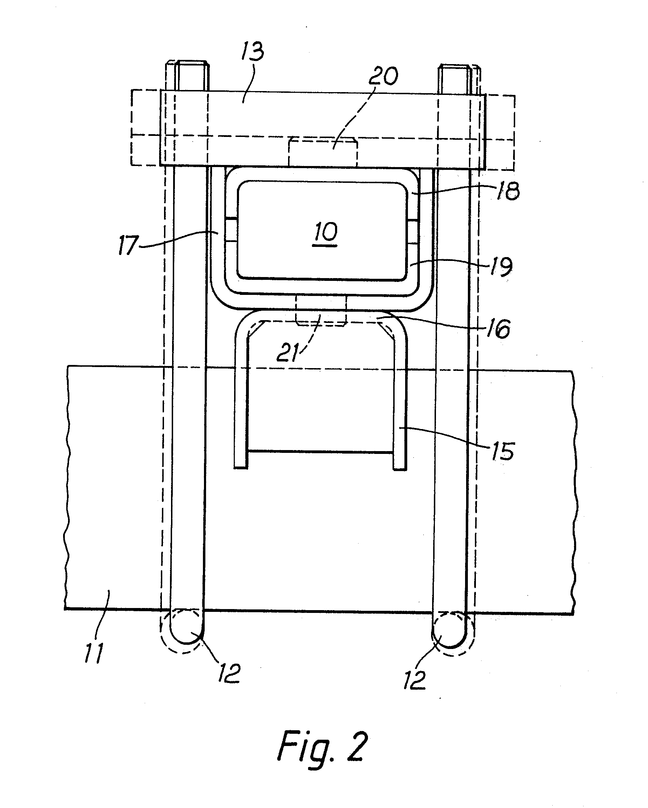

Referring firstly to Figures 1 and 2, there is shown an assembly comprising a leaf spring made of composite, fibre-reinforced plastics material and of which a central portion is indicated at 10, and a tubular axle beam 11. The axle beam 11 (which may be a driven (live) axle or an undriven axle) is held to the spring by two spaced U-bolts 12 which extend around the axle beam 11, and upwardly past sides of the spring 10 and through an abutment plate 13. Above the abutment plate 13, the U-bolts carry nuts 14 which when tightened clamp the assembly including the components described hereafter together. The axle beam 11 is seated in a metal pressing 15 which has a flat portion 16 facing the lower surface of the spring 10. The portion 16 abuts the flat underside of a generally U-section metal pressing 17 in which the spring 10 lies with the interposition of an upper element 18 and a lower element 19. Elements 18, 19 are of a resilient elastomeric material, e.g. a suitable rubber or a polyurethane material. The elements 18, 19 have respective projections 20, 21 which engage in apertures in the abutment plate 13, and in the pressings 17, 16, respectively.

In use, elements 18, 19 would be secured to the spring by use of a suitable adhesive. Therefore, in addition to acting as load spreaders in the clamped assembly and ensuring substantially uniform clamping pressure on the spring in the region of the assembly, they prevent dirt from penetrating to the spring surface.

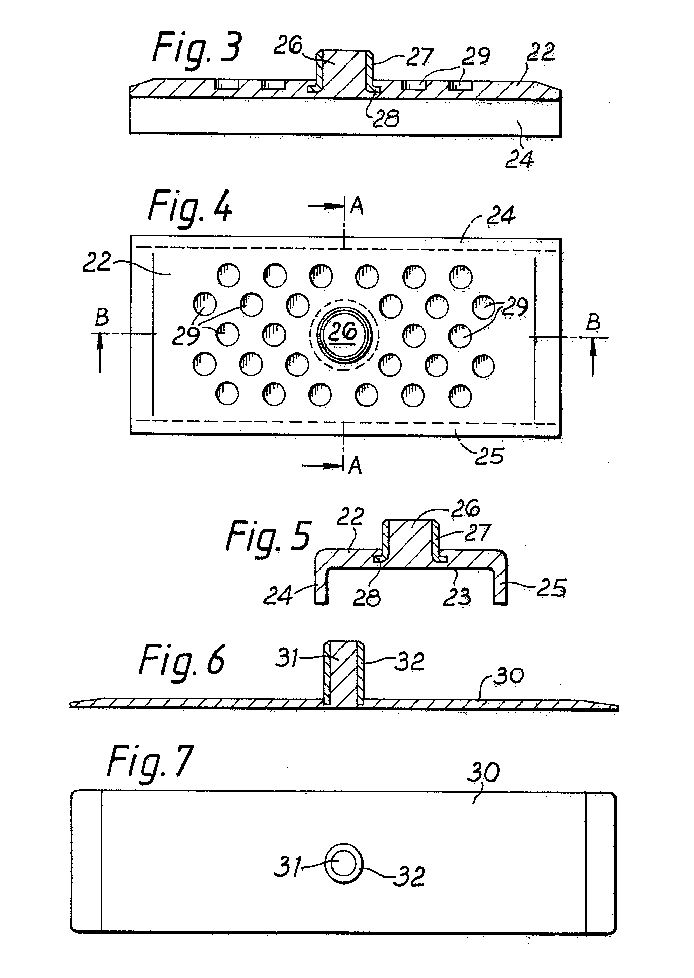

One of the elements 18, 19 is shown in detail in Figures 3 to 5. The illustrated element comprises a generally flat sheet-like portion 22 with a flat surface 23 which abuts the upper (or lower) surface of the spring in the complete assembly. Edge portions 24, 25 depend from the portion 22, and lie against the sides of the spring in the complete assembly. From the portion 22, opposite the side portions 25, there extends the projection (26) with a core portion integral with the material of the element and a metal sleeve 27 surrounding the core portion. It will be noted that the sleeve 27 terminates in an outwardly directed flange 28 which lies approximately halfway through the thickness of the portion 22 of the element. The flange 28 on the sleeve 27 is an advantageous feature since it has the effect that if a load is applied to the sleeve in the direction generally perpendicular to the sheet like portion 22, such load is spread into the portion 22 to some extent. If the flange were not present, the sleeve may tend to cut through the resilient material of the element under such loads, this possibility being reduced by the presence of the flange. The element would be manufactured by a moulding process, and the sleeve applied thereto as a part of such moulding process, e.g. by placing the sleeve in a mould into which the resilient material is to be introduced.

The surface of portion 22 of the element which is opposite the spring surface in use has a pattern of depressions 29 which extend approximately halfway through the thickness of the portion 22.

Referring now to Figures 6 and 7, there is shown an element which comprises a flat sheet 30 of polyurethane material with, on one surface, an integral projection with a core portion 31 and a surrounding metal sleeve 32. This element is intended to be incorporated in a clamped assembly somewhat as illustrated in the published international patent application aforesaid. Sleeve 32 may be provided with a flange as described above in relation to Figures 3 to 5 of the drawings.

## Claims

1. An element for disposition in an assembly of a leaf spring of composite material and a component held to the spring by clamping means, said element being arranged to be interposed between facing surfaces of said spring and component and being of a resilient material, comprising a portion (22, 30) of generally flat sheet-like form and a formation (26, 27, 31, 32) extending therefrom for engaging a recess in said component, characterised in that said formation comprises a metal sleeve (27, 32) surrounding a core portion (26, 31) of the resilient material of the element.

2. An element according to Claim 1, further characterised by edge portions (24) engagable with side surfaces of the spring.

3. An element according to Claim 1 or Claim 2 further characterised in that said sleeve (27) has a flange portion (28) lying within said sheet-like portion (22) of the element.

4. An element according to any one of the preceding claims further characterised in that said element is of an elastomeric material.

5. An assembly comprising:
a leaf spring (10) of composite material; an axle component (11, 15); clamping means (12, 14) holding said axle component to the spring with surfaces of the spring and axle component facing one another; and an element (19) of resilient material interposed between said facing surfaces; said element comprising a portion (22) generally in the form of a flat sheet and a portion (21) extending therefrom and engaging in a recess in said axle component, characterised in that the latter portion comprises a core (26) of the resilient material of the element and a metal sleeve (27) surrounding said core.

6. An assembly according to Claim 5 further characterised in that said flat sheet portion of said element is adhesively secured to the surface of the spring.

0283318

Fig.1

0283318

Fig. 2

0283318

**Fig. 3**

26  27  29  22

28

24

**Fig. 4**

A

24

22

B                    B

29                   29
29                   29

26

25

A

**Fig. 5**

22  26
27

24  28  23  25

**Fig. 6**

31  32

30

**Fig. 7**

30

31  32

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 161 155 (RENAULT)<br>* Page 1, line 34 - page 2, line 5; page 3, lines 16-21, figure 1 * | 1-5 | B 60 G 11/00 |
| Y | US-A-3 195 876 (FORD)<br>* Column 2, line 3 - column 3, line 49; figures 3,5-9 * | 1-5 | |
| A | US-A-3 061 301 (FORD)<br>* Column 2, line 70 - column 3, line 14; figures 7-9 * | 1,2,4,5 | |
| A | US-A-1 899 913 (G.M.)<br>* Page 1, lines 66-97; figures 2-4 * | 1,2,4,5 | |
| A | WO-A-8 605 851 (G.K.N.)<br>* Page 4, line 18 - page 15, line 31; figures 1,2 * | 1,4-6 | |
| A | GB-A-2 068 856 (TURNER QUICK-LIFT)<br>* Page 3, line 96 - page 4, line 13; figures 3-6 * | 1,2,4,5 | TECHNICAL FIELDS SEARCHED (Int. Cl.4)<br><br>B 60 G<br>F 16 F |

The present search report has been drawn up for all claims

| Place of search | Date of completion of the search | Examiner |
|---|---|---|
| THE HAGUE | 05-05-1988 | LINTZ C.H. |